# EUROPEAN PATENT APPLICATION

(11) **EP 4 715 986 A1**
(43) Date of publication of application: **25.03.2026**
(21) Application number: 24937277.2
(22) Date of filing: 08.11.2024
(51) Int. Cl.: H01M 50/258, H01M 10/613, H01M 10/6556, H01M 50/244, H01M 50/249

(54) **BATTERY MODULE, AND BATTERY PACK AND VEHICLE COMPRISING BATTERY MODULE**

(30) Priority: 22.04.2024 KR 20240053578
(71) Applicant: LG Energy Solution, Ltd., Seoul 07335 (KR)
(72) Inventor: CHO, Seong-Eun, Daejeon 34122 (KR); PARK, Sung-Kyu, Daejeon 34122 (KR)
(74) Representative: BCKIP Part mbB
(86) International application number: PCT/KR2024/017691
(87) International publication number: WO 2025/225804

(57) **Abstract**

Disclosed is a battery module with improved manufacture efficiency, and a battery pack and a vehicle including the same. The battery module includes a plurality of battery cells, and a plurality of module frames configured to accommodate the plurality of battery cells, respectively, and provided as sharable frames to be coupled to each other.

## Description

### TECHNICAL FIELD

The present disclosure relates to a battery module, and a battery pack and a vehicle including the same, and more particularly, to a battery module with improved manufacture efficiency, and a battery pack and a vehicle including the same.

This application is based on and claims priority from Korean Patent Application No. 10-2024-0053578, filed on April 22, 2024, with the Korean Intellectual Property Office, the disclosure of which is incorporated herein in its entirety by reference.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing environment friendliness and energy efficiency in that the use of fossil fuels can be reduced greatly and no byproduct is generated during energy consumption.

Secondary batteries widely used at the preset include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.5V. Therefore, if a higher output voltage is required, a plurality of battery cells may be connected in series to configure a battery pack. In addition, depending on the charge/discharge capacity required for the battery pack, a battery module is configured by connecting a plurality of battery cells in parallel or by mixing series and parallel connections. In addition, a battery pack is configured by configuring a plurality of battery modules in order to secure higher capacity, etc. Thus, the number of battery cells included in the battery module or battery pack may be variously set according to the required output voltage or the demanded charge/discharge capacity.

Recently, battery modules applied to electric vehicles, etc. are configured to include a large number of battery cells with higher cell capacity through a stacking structure to increase output and/or capacity.

However, the battery modules of this stacking structure have a problem that the manufacturing cost increases because various components are required according to the stacking structure. In addition, in the case of battery modules of this stacking structure, if there is a problem with positioning and alignment between components according to the stacking structure, there is also a problem that a process defect occurs due to assembly tolerance in the manufacturing process, or a problem occurs due to accumulated tolerance during assembly of the battery module and the battery pack.

Therefore, it is requested to find a way to solve the problem of assembly defects while reducing the manufacturing cost in the battery module of the stacking structure.

### DISCLOSURE

### Technical Problem

The present disclosure is directed to providing a battery module capable of reducing manufacturing costs, and a battery pack and a vehicle including the same.

In addition, the present disclosure is directed to providing a battery module capable of improving assembly defects, and a battery pack and a vehicle including the same.

However, the technical problems that the present disclosure seeks to solve are not limited to the above, and other problems not mentioned herein will be clearly understood by those skilled in the art from the following description.

### Technical Solution

In one aspect of the present disclosure, there is provided a battery module comprising: a plurality of battery cells; and a plurality of module frames configured to accommodate the plurality of battery cells, respectively, and provided as sharable frames to be coupled to each other.

Also, preferably, the battery module may further comprise a heatsink provided between the plurality of module frames and configured to allow the plurality of battery cells to be attached to both surfaces thereof.

Also, preferably, both surfaces of the heatsink may be provided as cooling surfaces.

Also, preferably, the plurality of module frames may include a first module frame provided at one side of the heatsink; and a second module frame provided at the other side of the heatsink and provided using the same frame as the first module frame.

Also, preferably, the first module frame and the second module frame may arranged to be inverted based on the heatsink.

Also, preferably, the heatsink may have a coupling guide to guide coupling with the plurality of module frames.

Also, preferably, the coupling guide may be provided at a periphery of the heatsink.

Also, preferably, the coupling guide may be provided to protrude by a predetermined length from a periphery of the heatsink.

Also, preferably, the coupling guide may be provided as a pair, and the pair of coupling guides may be provided at both sides of a periphery of the heatsink.

Also, preferably, the plurality of module frames may have a frame coupling portion coupled with the coupling guide.

Also, preferably, the frame coupling portion may include a first coupling portion provided at one side periphery of each module frame; and a second coupling portion provided at the other side periphery of each module frame.

Also, preferably, the coupling guide may have a guide hole through which at least one of the first coupling portion and the second coupling portion passes.

Also, preferably, the first coupling portion may be coupled with the second coupling portion of a facing module frame, and the second coupling portion may be coupled with the first coupling portion of a facing module frame.

Also, preferably, the first coupling portion may include a coupling protrusion, and the second coupling portion may include a coupling groove.

Also, preferably, the battery module may further comprise a pair of frame supports disposed to face each other with the heatsink interposed therebetween and configured to at least partially cover the plurality of module frames.

Also, preferably, the pair of frame supports may be provided as brackets identical to each other.

In addition, the present disclosure provides a battery pack comprising: at least one battery module according to the above embodiments; and a pack case configured to accommodate the at least one battery module.

Also, the present disclosure provides a vehicle comprising at least one battery pack according to the above embodiment.

### Advantageous Effects

According to various embodiments as above, it is possible to provide a battery module capable of lowering manufacturing costs, and a battery pack and a vehicle including the battery module.

In addition, according to various embodiments as above, it is possible to provide a battery module capable of improving assembly defects, and a battery pack and a vehicle including the battery module.

Moreover, various other additional effects may be achieved by various embodiments of the present disclosure. The various effects of the present disclosure will be explained in detail in each embodiment, or the effects that can be easily understood by those skilled in the art will not be described herein.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a battery module according to an embodiment of the present disclosure.
FIG. 2 is an exploded perspective view showing a battery module according to an embodiment of the present disclosure.
FIGS. 3 and 4 are drawings for illustrating the assembly between a first module frame, a heatsink, and a second module frame of the battery module according to an embodiment of the present disclosure.
FIGS. 5 to 7 are drawings for illustrating components that guide the assembly and positioning of the battery module according to an embodiment of the present disclosure.
FIG. 8 is a drawing for illustrating the process of assembling the battery module according to an embodiment of the present disclosure.
FIG. 9 is a drawing for illustrating the combination of the first module frame and the heatsink of the battery module according to an embodiment of the present disclosure.
FIG. 10 is an enlarged view showing part G of FIG. 9.
FIG. 11 is an enlarged view showing part H of FIG. 9.
FIG. 12 is a drawing for illustrating the combination of the first module frame and the second module frame of the battery module according to an embodiment of the present disclosure.
FIGS. 13 and 14 are drawings for illustrating the combination of a frame support of the battery module according to an embodiment of the present disclosure.
FIG. 15 is a drawing for illustrating a battery module according to another embodiment of the present disclosure.
FIG. 16 is a drawing for illustrating the heatsink of the battery module according to another embodiment of the present disclosure.
FIG. 17 is a drawing for illustrating the combination of the first module frame and the heatsink of the battery module according to another embodiment of the present disclosure.
FIG. 18 is an enlarged view showing part I of FIG. 17.
FIG. 19 is an enlarged view showing part J of FIG. 17.
FIG. 20 is a drawing for illustrating the combination of the first module frame and the second module frame of the battery module according to another embodiment of the present disclosure.
FIG. 21 is a diagram for illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, in this specification, terms indicating directions such as "upper", "lower", "left", "right", "front", and "rear" may be used, but these terms are only for convenience of explanation, and it is obvious to those skilled in the art these terms may vary depending on the location of a target object or the location of an observer.

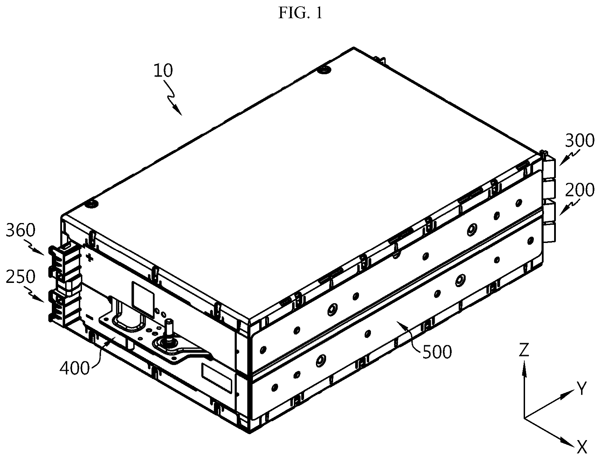

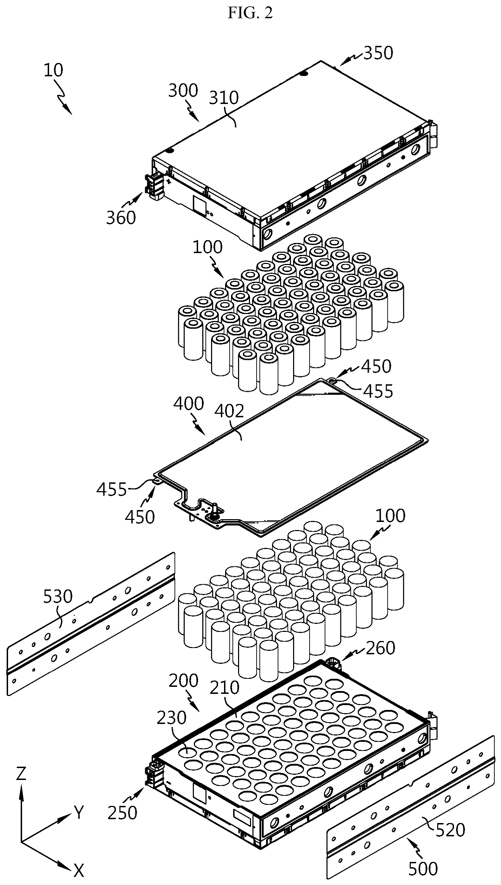

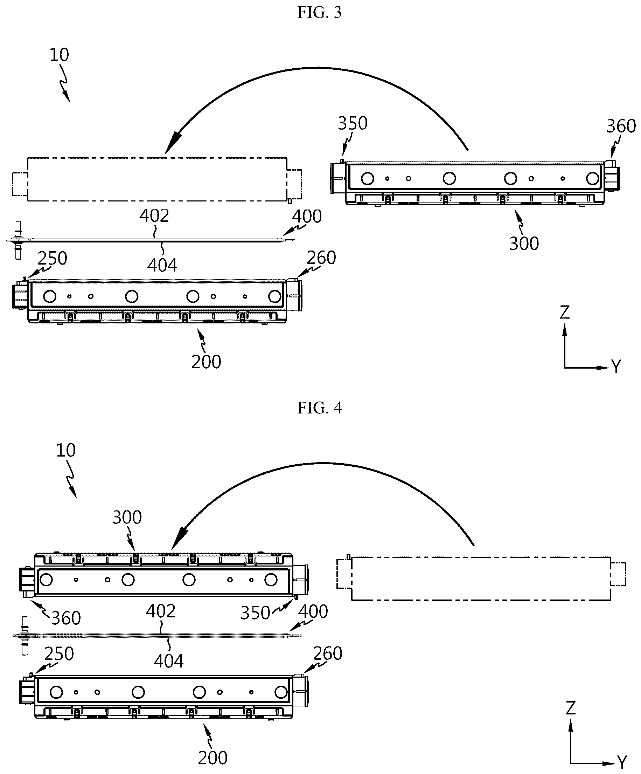

FIG. 1 is a diagram for illustrating a battery module according to an embodiment of the present disclosure, FIG. 2 is an exploded perspective view showing a battery module according to an embodiment of the present disclosure, and FIGS. 3 and 4 are drawings for illustrating the assembly between a first module frame, a heatsink, and a second module frame of the battery module according to an embodiment of the present disclosure.

Referring to FIGS. 1 to 4, the battery module 10 may include a plurality of battery cells 100 and a plurality of module frames 200, 300.

The plurality of battery cells 100 may be provided as secondary batteries, and may be provided as cylindrical secondary batteries, pouch-shaped secondary batteries, or square secondary batteries. Hereinafter, in this embodiment, the plurality of battery cells 100 are described as cylindrical secondary batteries. Meanwhile, as described above, the plurality of battery cells 100 may also be provided as pouch-shaped secondary batteries or square secondary batteries.

The plurality of module frames 200, 300 may accommodate the plurality of battery cells 100, respectively. The plurality of module frames 200, 300 are provided as sharable frames and may be coupled to each other. Being shareable may mean that the plurality of module frames 200, 300 are provided as identical frames. In this embodiment, the battery module 10 of the stacking structure may be configured by coupling the plurality of sharable module frames 200, 300, which are identical frames, to each other.

According to an embodiment of the present disclosure, when configuring the battery module 10 of a stacking structure for high energy density, the stacking structure is configured by coupling the plurality of module frames 200, 300, which are provided as sharable identical frames, to each other, thereby lowering the manufacturing costs and securing the cost competitiveness of the product.

Therefore, according to an embodiment of the present disclosure, the battery module 10 having a stacking structure capable of increasing energy density while increasing manufacturing efficiency may be provided.

The battery module 10 may include a heatsink 400.

The heatsink 400 is configured to cool the battery cells 100 and may be provided between the plurality of module frames 200, 300. The heatsink 400 may be configured to allow the plurality of battery cells 100 to be attached to both surfaces thereof. In this embodiment, since the plurality of battery cells 100 are attached to both surfaces of the heatsink 400, the plurality of battery cells 100 are in closer contact with the heatsink 400, thereby further securing the cooling performance.

Both surfaces of the heatsink 400 may be provided as cooling surfaces. In an embodiment of the present disclosure, since both surfaces of the heatsink 400 to which the battery cells 100 are attached are provided as cooling surfaces, the cooling performance of the battery cells 100 may be significantly increased.

In this way, in an embodiment of the present disclosure, the cooling performance of the battery cells 100 in the battery module 10 of the stacking structure may also be secured through the heatsink 400 provided between the sharable plurality of module frames 200, 300.

The plurality of module frames 200, 300 may include a first module frame 200 and a second module frame 300.

The first module frame 200 may be provided at one side (-Z-axis direction) of the heatsink 400. Specifically, the first module frame 200 may be provided at the lower side (-Z-axis direction) of the heatsink 400. The first module frame 200 may accommodate the plurality of battery cells 100 therein.

The second module frame 300 may be provided at the other side (+Z-axis direction) of the heatsink 400. Specifically, the second frame 300 may be provided at the upper side (+Z-axis direction) of the heatsink 400. The second module frame 300 may accommodate the plurality of battery cells 100 therein.

The second module frame 300 may be provided as sharable frames which are the same as the first module frame 200, and may be coupled with the first module frame 200 with the heatsink 400 interposed therebetween. As such, in this embodiment, since the heatsink 400 is positioned between the first module frame 200 and the second module frame 300, which are sharable and identical, and coupled to each other, it is possible to secure cooling performance and reducing manufacturing costs, thereby implementing a battery module 10 having a stacking structure with high energy density.

The first module frame 200 and the second module frame 300 may be arranged to be inverted based on the heatsink 400. Being arranged to be inverted may mean that one of the first module frame 200 and the second module frame 300 is arranged inverted. For example, as shown in FIG. 3, the second frame 300 may have the same arrangement form as the first module frame 200 before being coupled with the first module frame 200, and as shown in FIG. 4, the second frame 300 may be arranged to be inverted based on the heatsink 400 by being inverted in the opposite direction for coupling with the first module frame 200.

As such, in this embodiment, among the module frames 200, 300, which are provided with sharable identical module frames, for example the first module frame 200 and the second module frame 300, one of the module frames 300, for example the second module frame 300, may be arranged to be inverted to guide coupling with the first module frame 200, so that the first module frame 200 and the second module frame 300 may be coupled to each other more simply.

Therefore, the battery module 10 according to an embodiment of the present disclosure may significantly improve the assembling efficiency between the first module frame 200 and the second module frame 300 when they are coupled to each other.

Hereinafter, the battery module 10 according to an embodiment of the present disclosure will be described in more detail.

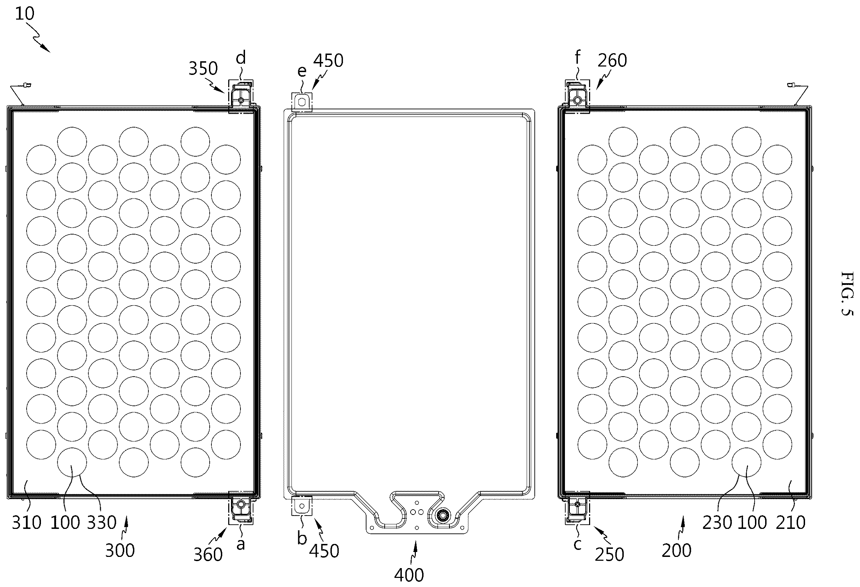

FIGS. 5 to 7 are drawings for illustrating components that guide the assembly and positioning of the battery module according to an embodiment of the present disclosure.

Referring to FIGS. 5 to 7, the heatsink 400 may include a coupling guide 450 to guide coupling with the plurality of module frames 200, 300. Through the coupling guide 450, the heatsink 400 may be more easily coupled with the plurality of module frames 200, 300 between the plurality of module frames 200, 300. For example, in this embodiment, the heatsink 400 may be more easily coupled with the first module frame 200 and the second module frame 300 through the coupling guide 450.

The coupling guide 450 may be provided at the periphery of the heatsink 400. In this embodiment, both surfaces (in the +Z-axis direction and the -Z-axis direction) of the heatsink 400, specifically the upper surface 402 and the lower surface 404 of the heatsink 400, may include the cooling surface to which the plurality of battery cells 100 are attached. In this embodiment, since the coupling guide 450 is not at the upper surface 402 of the heatsink 400 or the lower surface 404 of the heatsink 400 but provided at the periphery of the heatsink 400, the coupling between the heatsink 400 and the first module frame 200 and the second module frame 300 may be guided without interference with the cooling surface.

The coupling guide 450 may be provided to protrude from the periphery of the heatsink 400 by a predetermined length. The protruding length may be a length arranged on the same line as frame coupling portions 250, 350 of the plurality of module frames 200 and 300, explained later, in the stacking direction (Z-axis direction) of the battery module 10. In addition, the coupling guide 450 may protrude from the periphery of the heatsink 400 by the predetermined length along the horizontal direction (Y-axis direction). Accordingly, during an assembly process for manufacturing the battery module 10, the coupling guide 450 may be guided to be guided more easily from the heatsink 400 by a worker or the like, and further, the assembly accuracy between the plurality of module frames 200, 300 may also be improved.

The coupling guide 450 may be provided as a pair. The pair of coupling guides 450 may be provided at both sides (+Y-axis direction and -Y-axis direction) of the periphery of the heatsink 400. Specifically, the pair of coupling guides 450 may be provided at one side of the periphery front end (-Y-axis direction) of the heatsink 400 and one side of the periphery rear end (+Y-axis direction) of the heatsink 400. The pair of coupling guides 450 may be arranged on the same line in the length direction (Y-axis direction) of the heatsink 400. According to an embodiment of the present disclosure, the coupling accuracy between the heatsink 400 and the plurality of module frames 200, 300 may be further improved through the pair of coupling guides 450. Also, through the pair of coupling guides 450, the heatsink 400 may be more stably fixed and supported between the plurality of module frames 200, 300.

The plurality of module frames 200, 300 may include frame coupling portions 250 and 260, 350 and 360 coupled with the coupling guide 450 of the heatsink 400. The frame coupling portions 250 and 260, 350 and 360 are provided in the module frames 200, 300, respectively, and may be arranged on the same line as the heatsink 400 in the stacking direction (Z-axis direction) when coupled between the plurality of module frames 200, 300 and the heatsink 400. The frame coupling portions 250 and 260, 350 and 360 are coupled to each other to connect the plurality of module frames 200, 300 to each other, and when coupled, the frame coupling portions 250 and 260, 350 and 360 may be connected to the coupling guide 450 of the heatsink 400.

The frame coupling portions 250 and 260, 350 and 360 may include first coupling portions 250, 350 and second coupling portions 260, 360.

The first coupling portion 250, 350 may be provided at one periphery of each of the module frames 200, 300. The second coupling portion 260, 360 may be provided at the other periphery of each of the module frames 200, 300. The first coupling portion 250, 350 and the second coupling portion 260, 360 may be provided at both peripheries of each of the module frames 200, 300 to guide the module frames 200, 300 to be coupled with each other.

The coupling guide 450 may have a guide hole 455 through which at least one of the first coupling portion 250, 350 and the second coupling portion 260, 360 passes. The guide hole 455 may pass through at least one of the first coupling portion 250, 350 and the second coupling portion 260, 360 when the module frames 200, 300 are coupled to each other, so that the heatsink 400 may be connected to the respective module frames 200, 300 and fixed between the respective module frames 200, 300.

The first coupling portion 250, 350 may be coupled with the second coupling portion 260, 360 of the facing module frame 200, 300, and the second coupling portion 260, 360 may be coupled with the first coupling portion 250, 350 of the facing module frame 200, 300. As described above, when the module frames 200, 300 are coupled to each other, one of the module frames 300 is coupled to be inverted. Thus, when the module frames 200, 300 are coupled to each other, the first coupling portion 250, 350 and the second coupling portion 260, 360 of the facing module frames 200, 300 may be coupled to each other.

The first coupling portion 250, 350 may include a coupling protrusion 252, 352. The second coupling portion 260, 360 may include a coupling groove 266, 366. The coupling protrusion 252, 352 and the coupling groove 266, 366 may be coupled with each other. The mutual coupling of the coupling protrusion 252, 352 and the coupling groove 266, 366 may be performed by inserting the coupling protrusion 252, 352 into the coupling groove 266, 366.

Hereinafter, the frame coupling portion 250, 260, 350, 360 will be described in more detail, focusing on the first module frame 200 and the second module frame 300.

The first module frame 200 may include a frame body 210, a cell accommodation portion 230, and the frame coupling portions 250, 260, which are the first coupling portion 250 and the second coupling portion 260.

The frame body 210 may form the appearance of the first module frame 200. The frame body 210 may be provided in a roughly hexahedral shape.

The cell accommodation portion 230 is provided in the frame body 210 and may accommodate the plurality of battery cells 100. The cell accommodation portion 230 may be provided in plurality to correspond to the plurality of battery cells 100. The plurality of battery cells 100 may be inserted into the plurality of cell accommodation portions 230, respectively. Meanwhile, in this embodiment, a protruding electrode portion, such as a positive electrode may be provided at one side of the plurality of battery cells 100. Conversely, the other side of the plurality of battery cells 100 may have a flat surface without a protruding portion, unlike the one side of the plurality of battery cells 100. In this embodiment, the plurality of battery cells 100 may be inserted into the plurality of cell accommodation portions 230 so that the other side provided as a flat surface, such as a positive electrode, which is opposite to the one side having the protruding electrode portion, may be exposed to the outside of the cell accommodation portion 230. Accordingly, in this embodiment, when the battery cells 100 are attached to the cooling surface of the heatsink 400 during assembly of the battery module 10, the other side of the battery cells 100, which is provided as a flat surface, may be attached to the cooling surface of the heatsink 400. Accordingly, in this embodiment, since the battery cells 100 are in closer contact with the cooling surface of the heatsink 400, the cooling performance of the battery cells 100 may be further improved.

The first coupling portion 250 may include a coupling portion body 251 and the coupling protrusion 252.

The coupling portion body 251 may be provided at one end of the frame body 210. The coupling portion body 251 may accommodate the coupling protrusion 252, explained later, therein. The coupling protrusion 252 may be provided within the coupling portion body 251 and may be provided to protrude by a predetermined length along the stacking direction (Z-axis direction).

The second coupling portion 260 may include a coupling portion body 265 and the coupling groove 266.

The coupling portion body 265 is provided at the other end of the frame body 210 and may be arranged at the opposite side of the coupling portion body 251 of the first coupling portion 250. The coupling portion body 265 may accommodate the coupling groove 266, explained later, therein. The coupling groove 266 is provided within the coupling portion body 265 and may be provided in a groove shape having a predetermined depth along the stacking direction (Z-axis direction).

The second module frame 300 may include the frame body 310, the cell accommodation portion 330, and the frame coupling portion 350, 360, which are the first coupling portion 350 and the second coupling portion 360.

The frame body 310 may form the appearance of the second module frame 300. The frame body 310 may be provided in a roughly hexahedral shape. The frame body 310 may be provided using the same components as the frame body 210 of the first module frame 200 so as to be shared.

The cell accommodation portion 330 is provided in the frame body 310 and may accommodate the plurality of battery cells 100. The cell accommodation portion 330 may be provided in plurality to correspond to the plurality of battery cells 100. The plurality of battery cells 100 may be inserted into the plurality of cell accommodation portions 330, respectively. Like the cell accommodation portion 230 of the first module frame 200 described above, the plurality of battery cells 100 may be inserted into the plurality of cell accommodation portions 330 so that the other side provided as a flat surface, such as a positive electrode, which is opposite to one side having a protruding electrode portion, may be exposed to the outside of the cell accommodation portion 330. Therefore, like the cell accommodation portion 230 described above, the battery cells 100 inserted into the cell accommodation portion 330 may be in close contact with the cooling surface of the heatsink 400 to improve cooling performance.

The first coupling portion 350 may include a coupling portion body 351 and the coupling protrusion 352.

The coupling portion body 351 may be provided at one end of the frame body 310, like the coupling portion body 251 of the first coupling portion 250 of the first module frame 200. The coupling portion body 351 may accommodate the coupling protrusion 352, explained later, therein. The coupling protrusion 352 may be provided within the coupling portion body 351 and may be provided to protrude by a predetermined length along the stacking direction (Z-axis direction).

The second coupling portion 360 may include a coupling portion body 365 and the coupling groove 366.

The coupling portion body 365 is provided at the other end of the frame body 310, like the coupling portion body 265 of the second coupling portion 260 of the first module frame 200, and may be arranged at the opposite side of the coupling portion body 351 of the first coupling portion 350. The coupling portion body 365 may accommodate the coupling groove 366, explained later, therein. The coupling groove 366 is provided within the coupling portion body 365 and may be provided in a groove shape having a predetermined depth along the stacking direction (Z-axis direction).

In this embodiment, when the first module frame 200 and the second module frame 300 are coupled to each other, the following coupling relationship may be formed since one of the first module frame 200 and the second module frame 300, for example the second module frame 300, is inverted and coupled.

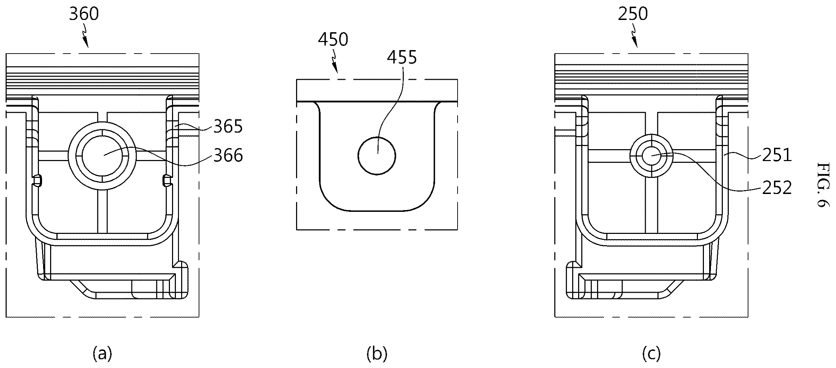

First, as shown in FIGS. 5 and 6, when the first module frame 200 and the second module frame 300 are coupled to each other, the coupling protrusion 251 of the first coupling portion 250 of the first module frame 200, the coupling guide 450 of the heatsink 400, and the coupling groove 366 of the second coupling portion 360 of the second module frame 300 may be coupled to each other. Specifically, the coupling protrusion 251 of the first coupling portion 250 of the first module frame 200 may pass through the guide hole 455 of the coupling guide 450 of the heatsink 400 and then be inserted into the coupling groove 366 of the second coupling portion 360 of the second module frame 300. Also, the coupling portion body 251 of the first coupling portion 250 of the first module frame 200 and the coupling portion body 365 of the second coupling portion 360 of the second module frame 300 may be coupled to each other to cover the coupling protrusion 251 of the first coupling portion 250, the coupling guide 450 of the heatsink 400, and the coupling groove 366 of the second coupling portion 360 of the second module frame 300. Here, the mutual coupling between the coupling portion body 251 of the first coupling portion 250 of the first module frame 200 and the coupling portion body 365 of the second coupling portion 360 of the second module frame 300 may be hooking or snapping therebetween to prevent separation after coupling.

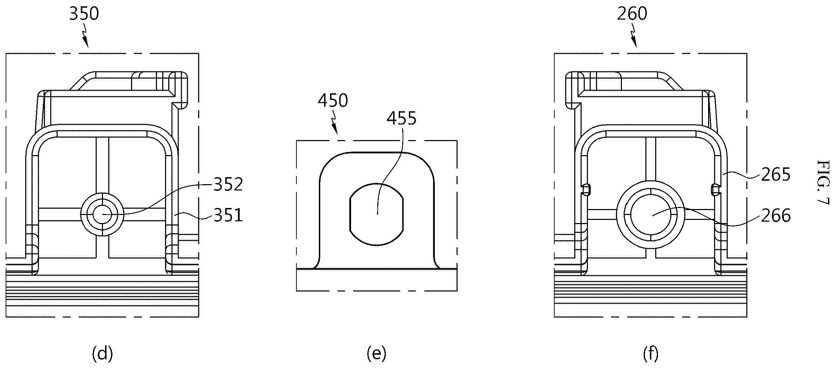

In addition, as shown in FIGS. 5 and 7, when the first module frame 200 and the second module frame 300 are coupled to each other, the coupling groove 266 of the second coupling portion 260 of the first module frame 200, the coupling guide 450 of the heatsink 400, and the coupling protrusion 352 of the first coupling portion 350 of the second module frame 300 may be coupled to each other. Specifically, the coupling protrusion 352 of the first coupling portion 350 of the second module frame 300, which passes through the guide hole 455 of the coupling guide 450 of the heatsink 400, may be inserted into the coupling groove 266 of the second coupling portion 260 of the first module frame 200. Also, the coupling portion body 265 of the second coupling portion 260 of the first module frame 200 and the coupling portion body 351 of the first coupling portion 350 of the second module frame 300 may be coupled to each other to cover the coupling groove 266 of the second coupling portion 260, the coupling guide 450 of the heatsink 400, and the coupling protrusion 352 of the first coupling portion 350 of the second module frame 300. Here, the mutual coupling between the coupling portion body 265 of the second coupling portion 260 of the first module frame 200 and the coupling portion body 351 of the first coupling portion 350 of the second module frame 300 may be hooking or snapping therebetween to prevent separation after coupling.

Referring to FIGS. 1 and 2 again, the battery module 10 may include a pair of frame supports 500.

The pair of frame supports 500 may be arranged to face each other with the heatsink 400 interposed therebetween. The pair of frame supports 500 may at least partially cover the plurality of module frames 200, 300. At least a portion of the pair of frame supports 500 may be interposed between the plurality of module frames 200, 300 or may be connected to the plurality of module frames 200, 300 through a fastening member or the like. In this embodiment, the rigidity of the battery module 10 may be reinforced through the pair of frame supports 500, and the heatsink 400 may be protected from external impact, etc.

The pair of frame supports 500 may be provided as identical brackets. As above, in this embodiment, the frame support 500 may be provided as sharable identical components, thereby further reducing the manufacturing cost of the battery module 10.

The pair of frame supports 500 may include a first support bracket 520 and a second support bracket 530.

The first support bracket 520 may at least partially cover one side (+X-axis direction) of the side surface of the first module frame 200 and the second module frame 300. The first support bracket 520 may be mutually coupled with the first module frame 200 and the second module frame 300 through a fastening member or the like, or may be interposed between and fixed to the first module frame 200 and the second module frame 300.

The second support bracket 530 may be provided with the same bracket as the first support bracket 520 so as to be shared. The second support bracket 530 may at least partially cover the other side (-X-axis direction) of the side surface of the first module frame 200 and the second module frame 300. The second support bracket 530 may be mutually coupled with the first module frame 200 and the second module frame 300 through a fastening member or the like, or may be interposed between and fixed to the first module frame 200 and the second module frame 300.

Since the first support bracket 520 and the second support bracket 530 are identical brackets, the first support bracket 520 and the second support bracket 530 may also be coupled to the first module frame 200 and the second module frame 300 such that the second support bracket 530 at least partially covers one side (+X-axis direction) of the side surface of the first module frame 200 and the second module frame 300, and the first support bracket 520 at least partially covers the other side (-X-axis direction) of the side surface of the first module frame 200 and the second module frame 300.

Hereinafter, the process of assembling the battery module 10 according to an embodiment of the present disclosure will be described in more detail.

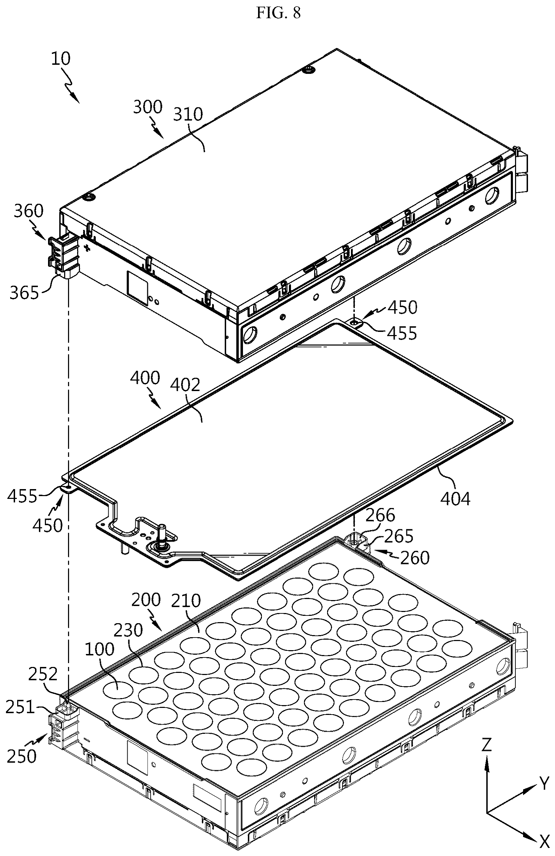

FIG. 8 is a drawing for illustrating the process of assembling the battery module according to an embodiment of the present disclosure.

Referring to FIG. 8, when assembling the battery module 10, a manufacturer such as a worker or the like may first insert the battery cells 100 into the cell accommodation portion 230 of the first module frame 200 and the cell accommodation portion 330 (see FIG. 5) of the second module frame 300. Here, the battery cells 100 may be inserted into the cell accommodation portion 230, 330 so that a flat surface, which is an opposite side of the protruding electrode portion, is exposed to increase the contact area with the upper surface 402 and the lower surface 404, which are the cooling surfaces 402, 404 of the heatsink 400, as described above.

Meanwhile, the second module frame 300, which is made of the same components as the first module frame 200 so as to be shared, may be inverted and disposed at the upper side (+Z-axis direction) of the first module frame 200 with the heatsink 400 interposed therebetween, as shown in FIGS. 3 and 4.

The worker or the like may arrange the frame coupling portions 250, 260 of the first module frame 200, the coupling guide 450 of the heatsink 400, and the frame coupling portions 360, 350 of the second module frame 300 on the same line in the stacking direction (Z-axis direction) for coupling the first module frame 200, the heatsink 400, and the second module frame 300. Specifically, the worker or the like may arrange the first coupling portion 250 of the first module frame 200, the coupling guide 450 of the front end (-Y-axis direction) of the heatsink 400, and the second coupling portion 360 of the second module frame 300 on the same line along the stacking direction (Z-axis direction) when viewed from the front end (-Y-axis direction) of the battery module 10. Also, the worker or the like may arrange the second coupling portion 260 of the first module frame 200, the coupling guide 450 of the rear end (+Y-axis direction) of the heatsink 400, and the first coupling portion 350 (see FIGS. 5 to 7) of the second module frame 300 on the same line along the stacking direction (Z-axis direction) when viewed from the rear end (+Y-axis direction) of the battery module 10.

In this embodiment, the assembly efficiency of the battery module 10 may be improved and assembly defects may be minimized by guiding positioning of the frame coupling portion 250, 260 of the first module frame 200, the coupling guide 450 of the heatsink 400, and the frame coupling portion 360, 350 of the second module frame 300 in the stacking direction (Z-axis direction).

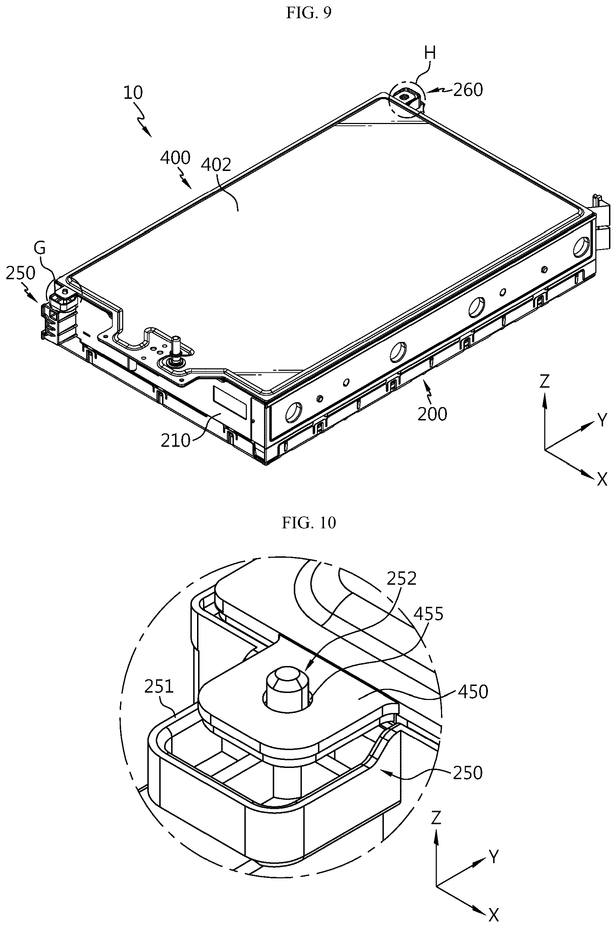

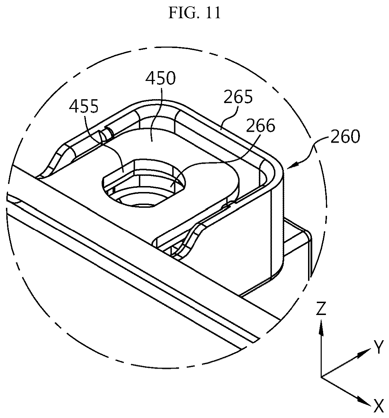

FIG. 9 is a drawing for illustrating the combination of the first module frame and the heatsink of the battery module according to an embodiment of the present disclosure, FIG. 10 is an enlarged view showing part G of FIG. 9, and FIG. 11 is an enlarged view showing part H of FIG. 9.

Referring to FIGS. 9 to 11, thereafter, the worker or the like may mount the heatsink 400 on the first module frame 200. At this time, the coupling guide 450 provided at the front end (-Y-axis direction) of the heatsink 400 may be mounted on the coupling portion body 251 of the first coupling portion 250 of the first module frame 200. In addition, the coupling protrusion 252 protruding within the coupling portion body 251 may protrude by a predetermined length toward the upper side (+Z-axis direction) of the coupling guide 450 of the heatsink 400 by passing through the guide hole 455 of the coupling guide 450. Also, the coupling guide 450 provided at the rear end (+Y-axis direction) of the heatsink 400 may be mounted on the coupling portion body 265 of the second coupling portion 260 of the first module frame 200. Also, the coupling groove 266 formed in the coupling portion body 265 may be exposed to the upper side (+Z-axis direction) of the coupling guide 450 by communicating with the guide hole 455 of the coupling guide 450.

In this embodiment, the heatsink 400 may be guided for proper positioning between the first module frame 200 and the second module frame 300 by mounting the coupling guide 450 of the heatsink 400 toward the coupling portion body 251 of the first coupling portion 250 of the first module frame 200 and the coupling portion body 265 of the second coupling portion 260.

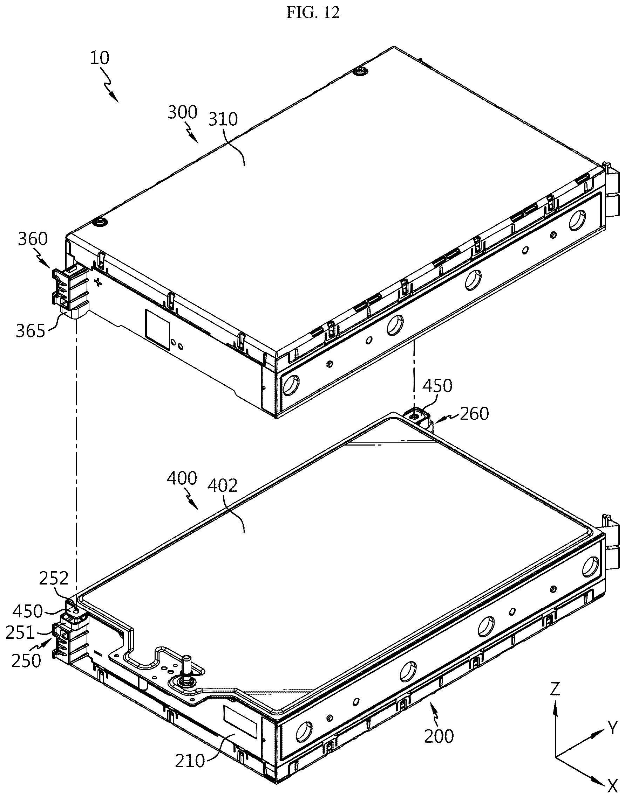

FIG. 12 is a drawing for illustrating the combination of the first module frame and the second module frame of the battery module according to an embodiment of the present disclosure.

Referring to FIG. 12, thereafter, the worker or the like may couple the second module frame 300, which is arranged to be inverted, to the first module frame 200. Specifically, the coupling protrusion 252 of the first coupling portion 250 of the first module frame 200, which protrudes out of the coupling guide 450 of the heatsink 400 at the front end (-Y-axis direction) of the battery module 10, may be fitted into the coupling groove 366 (see FIGS. 5 to 7) of the second coupling portion 360 of the second module frame 300. Moreover, the coupling portion body 251 of the first coupling portion 250 of the first module frame 200 and the coupling portion body 365 of the second coupling portion 360 of the second module frame 300 may be coupled to each other to cover the coupling protrusion 252 of the first coupling portion 250, the coupling guide 450 of the heatsink 400, and the coupling groove 366 (see FIGS. 5 to 7) of the second coupling portion 360. Also, the coupling protrusion 352 (see FIGS. 5 to 7) of the first coupling portion 350 (see FIGS. 5 to 7) of the second module frame 300 may be fitted into the coupling groove 266 (see FIGS. 5 to 7) of the second coupling portion 260 (see FIGS. 5 to 7) of the first module frame 200, which is exposed out of the coupling guide 450 of the heatsink 400 at the rear end (+Y-axis direction) of the battery module 10. Also, the coupling portion body 265 (see FIGS. 5 to 7) of the second coupling portion 260 of the first module frame 200 and the coupling portion body 351 of the first coupling portion 350 (see FIGS. 5 to 7) of the second module frame 300 may be coupled to each other to cover the coupling groove 266 (see FIGS. 5 to 7) of the second coupling portion 260, the coupling guide 450 of the heatsink 400, and the coupling protrusion 352 (see FIGS. 5 to 7) of the first coupling portion 350.

In this embodiment, through the first module frame 200 and the second module frame 300, which is turned over to be arranged inversely and coupled with the first module frame 200, wherein the first module frame 200 and the second module frame 300 being provided as sharable identical components, when the first module frame 200 and the second module frame 300 are coupled to each other, the first coupling portion 250, which is the frame coupling portion 250 of the first module frame 200, and the second coupling portion 360, which is the frame coupling portion 360 of the second module frame 300, are forced to be coupled to each other, and the second coupling portion 260, which is the frame coupling portion 260 of the first module frame 200, and the first coupling portion 250, which is the frame coupling portion 250 of the second module frame 300, are forced to be coupled to each other. That is, when the first module frame 200 and the second module frame 300 are coupled to each other, the coupling protrusion 252 of the first coupling portion 250 and the coupling groove 366 of the second coupling portion 360 are forced to be coupled, and the coupling groove 266 of the second coupling portion 260 and the coupling protrusion 352 of the first coupling portion 350 are forced to be coupled through the inverted arrangement of one of the module frames 300. Thus, the risk of misassembly may be more fundamentally blocked.

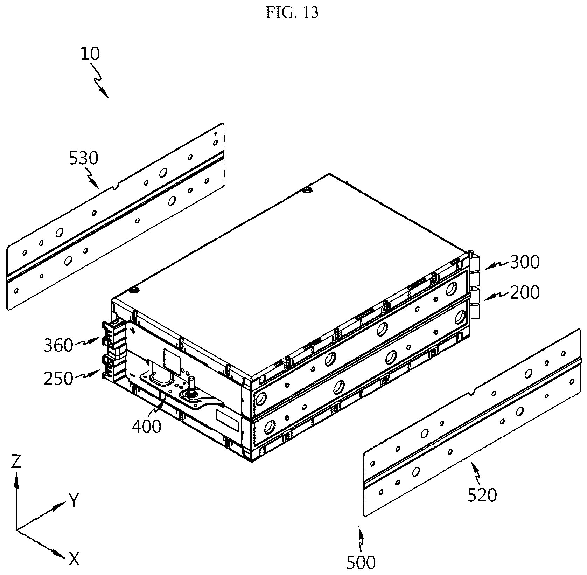

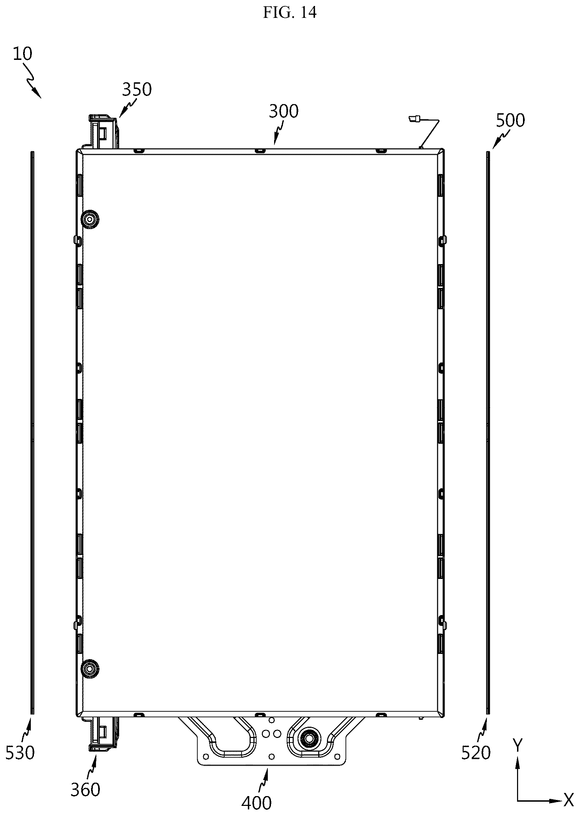

FIGS. 13 and 14 are drawings for illustrating the combination of a frame support of the battery module according to an embodiment of the present disclosure.

Referring to FIGS. 13 and 14, thereafter, the worker or the like may couple the first support bracket 520 and the second support bracket 530 of the frame support 500, which are provided as sharable identical components, to the side surfaces of the first module frame 200 and the second module frame 300, respectively, at both sides (X-axis direction) of the battery module 10.

As such, in an embodiment of the present disclosure, during the process of assembling the battery module 10, the battery module 10 is assembled using the first module frame 200 and the second module frame 300, which are provided as sharable identical components, as well as the first support bracket 520 and the second support bracket 530, thereby reducing the manufacturing cost and also shortening the assembly tap time. Accordingly, in an embodiment of the present disclosure, the efficiency of the process of assembling the battery module 10 may be significantly improved.

In this way, in this embodiment, the battery module 10 of the stacking structure having a high energy density may be provided while realizing easier assembly through an assembly structure having a plurality of sharable components.

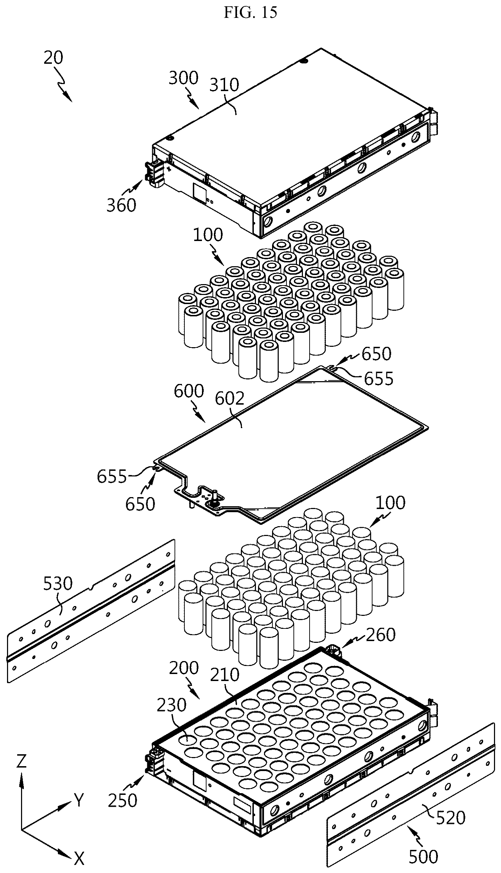

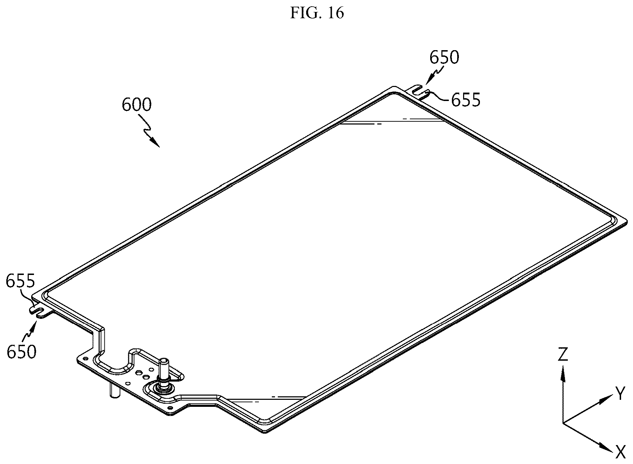

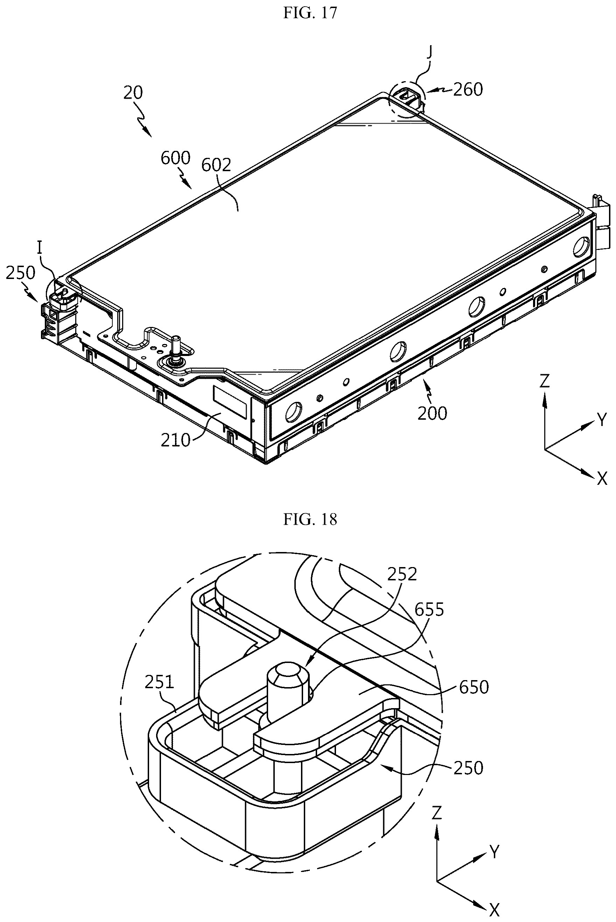

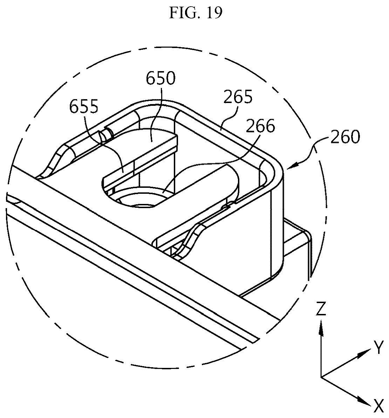

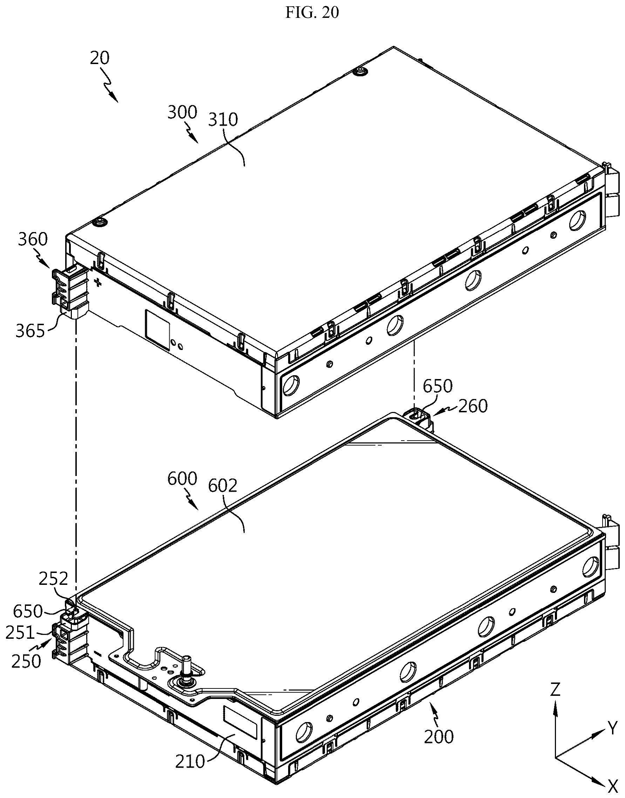

FIG. 15 is a drawing for illustrating a battery module according to another embodiment of the present disclosure, FIG. 16 is a drawing for illustrating the heatsink of the battery module according to another embodiment of the present disclosure, FIG. 17 is a drawing for illustrating the combination of the first module frame and the heatsink of the battery module according to another embodiment of the present disclosure, FIG. 18 is an enlarged view showing part I of FIG. 17, FIG. 19 is an enlarged view showing part J of FIG. 17, and FIG. 20 is a drawing for illustrating the combination of the first module frame and the second module frame of the battery module according to another embodiment of the present disclosure.

The battery module 20 according to this embodiment is similar to the battery module 10 of the former embodiment, so features substantially identical or similar to those of the former embodiment will not be described again, and features different from the former embodiment will be described in detail.

Referring to FIGS. 15 to 20, the battery module 20 may include the plurality of battery cells 100, the first module frame 200, the second module frame 300, the frame support 500, and a heatsink 600.

The plurality of battery cells 100, the first module frame 200, the second module frame 300, and the frame support 500 are substantially identical or similar to those of the former embodiment, and therefore will not be described in detail again.

The heatsink 600 may include a coupling guide 650.

The coupling guide 650 may include a guide hook 655. The guide hook 655 may be provided in a ring shape having an opening in a protruding direction of the coupling guide 650. Specifically, the guide hook 655 of the coupling guide 650 provided at the front end (-Y-axis direction) of the heatsink 600 may have an opening that is open at the front side (-Y-axis direction) of the heatsink 600, and the guide hook 655 of the coupling guide 650 provided at the rear end (+Y-axis direction) of the heatsink 600 may have an opening that is open at the rear side (+Y-axis direction) of the heatsink 600.

The guide hook 655 may guide the insertion of the coupling protrusion 252, 352 through the opening more smoothly when the heatsink 600 is mounted, and may also guide the smoother exposure of the coupling groove 266, 366 out of the heatsink 600.

In addition, in this embodiment, the guide hook 655 of the coupling guide 650 of the heatsink 600 may also provide a smoother mutual coupling between the coupling protrusion 252, 352 and the coupling groove 266, 366.

Therefore, in the battery module 20 according to this embodiment, the assembling efficiency may be further improved when the first module frame 200, the heatsink 600, and the second module frame 300 are coupled to each other.

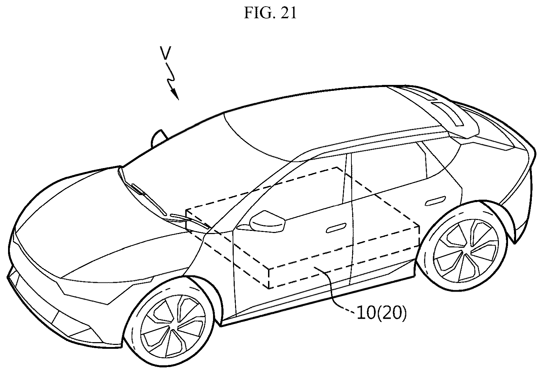

FIG. 21 is a drawing for illustrating a vehicle according to an embodiment of the present disclosure.

Referring to FIG. 21, a battery pack according to an embodiment of the present disclosure may be configured to include at least one battery module 10, 20 of the former embodiment and a pack case accommodating the at least one battery module 10, 20. The pack case may be mounted on a vehicle, explained later. Meanwhile, the pack case may also be configured as a chassis of the vehicle, explained later.

The battery pack may include a cooling pipe assembly. The cooling pipe assembly is to supply a cooling medium to the heatsink 400, 600 (see FIGS. 2 and 15) of the battery module 10, 20 and discharge the cooling medium circulated through the heatsink 400, 600 (see FIGS. 2 and 15) to the outside of the battery module 10, 20, and may connect the heatsink 400, 600 (see FIGS. 2 and 15) to an external cooling device.

The battery pack may include an electric unit.

The electric unit may include electrical components such as a BMS that controls the battery module 10, 20. The electric unit may further include components such as a current sensor, a fuse, and a service plug.

The vehicle V according to an embodiment of the present disclosure may include a battery pack including the above-described battery module 10, 20 according to the present disclosure. In addition, the vehicle V according to an embodiment of the present disclosure may further include various other components included in a vehicle, in addition to the battery pack. For example, the vehicle V according to an embodiment of the present disclosure may further include a vehicle body, a motor, and a control device such as an ECU (electronic control unit), in addition to the battery pack according to an embodiment of the present disclosure.

In addition, the battery pack including the battery module 10, 20 according to the present disclosure may be provided to other devices, instruments, and equipment, such as an energy storage device (ESS) that uses secondary batteries, in addition to the vehicle 1.

According to various embodiments as above, it is possible to provide a battery module 10, 20 capable of lowering manufacturing costs, and a battery pack and a vehicle V including the battery module.

In addition, according to various embodiments as above, it is possible to provide a battery module 10, 20 capable of improving assembly defects, and a battery pack and a vehicle V including the battery module.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery module comprising:
a plurality of battery cells; and
a plurality of module frames configured to accommodate the plurality of battery cells, respectively, and provided as sharable frames to be coupled to each other.

2. The battery module according to claim 1, further comprising:
a heatsink provided between the plurality of module frames and configured to allow the plurality of battery cells to be attached to both surfaces thereof.

3. The battery module according to claim 1,
wherein both surfaces of the heatsink are provided as cooling surfaces.

4. The battery module according to claim 1,
wherein the plurality of module frames includes:
a first module frame provided at one side of the heatsink; and
a second module frame provided at the other side of the heatsink and provided using the same frame as the first module frame.

5. The battery module according to claim 3,
wherein the first module frame and the second module frame are arranged to be inverted based on the heatsink.

6. The battery module according to claim 1,
wherein the heatsink has a coupling guide to guide coupling with the plurality of module frames.

7. The battery module according to claim 6,
wherein the coupling guide is provided at a periphery of the heatsink.

8. The battery module according to claim 6,
wherein the coupling guide is provided to protrude by a predetermined length from a periphery of the heatsink.

9. The battery module according to claim 6,
wherein the coupling guide is provided as a pair, and
wherein the pair of coupling guides are provided at both sides of a periphery of the heatsink.

10. The battery module according to claim 6,
wherein the plurality of module frames have a frame coupling portion coupled with the coupling guide.

11. The battery module according to claim 10,
wherein the frame coupling portion includes:
a first coupling portion provided at one side periphery of each module frame; and
a second coupling portion provided at the other side periphery of each module frame.

12. The battery module according to claim 11,
wherein the coupling guide has a guide hole through which at least one of the first coupling portion and the second coupling portion passes.

13. The battery module according to claim 11,
wherein the first coupling portion is coupled with the second coupling portion of a facing module frame, and
wherein the second coupling portion is coupled with the first coupling portion of a facing module frame.

14. The battery module according to claim 11,
wherein the first coupling portion includes a coupling protrusion, and
wherein the second coupling portion includes a coupling groove.

15. The battery module according to claim 1, further comprising:
a pair of frame supports disposed to face each other with the heatsink interposed therebetween and configured to at least partially cover the plurality of module frames.

16. The battery module according to claim 15,
wherein the pair of frame supports are provided as brackets identical to each other.

17. A battery pack comprising:
at least one battery module as defined in any one of claims 1 to 16; and
a pack case configured to accommodate the at least one battery module.

18. A vehicle comprising at least one battery pack as defined in claim 17.
